(19) **Europäisches Patentamt**
**European Patent Office**
**Office européen des brevets**

(11) Veröffentlichungsnummer : **0 335 437 B1**

(12) # EUROPÄISCHE PATENTSCHRIFT

(45) Veröffentlichungstag der Patentschrift :
**04.03.92 Patentblatt 92/10**

(51) Int. Cl.$^5$ : **G01M 11/00**, G01B 11/24

(21) Anmeldenummer : **89200691.7**

(22) Anmeldetag : **20.03.89**

(54) **Verfahren zur Messung der Exzentrizität eines in einem zylindrischen Steckerstift eingebetteten Lichtwellenleiters.**

(30) Priorität : **25.03.88 DE 3810057**

(43) Veröffentlichungstag der Anmeldung :
**04.10.89 Patentblatt 89/40**

(45) Bekanntmachung des Hinweises auf die Patenterteilung :
**04.03.92 Patentblatt 92/10**

(84) Benannte Vertragsstaaten :
**CH DE ES FR GB IT LI**

(56) Entgegenhaltungen :
**EP-A- 0 213 067**
**FR-A- 2 526 935**
**GB-A- 2 040 495**
**PATENT ABSTRACTS OF JAPAN, unexamined applications, Sektion E, Band 2, Nr. 104, 26. August 1978 THE PATENT OFFICE JAPANESE GOVERNMENT Seite 5452 E 78**

(73) Patentinhaber : **Philips Patentverwaltung GmbH**
**Wendenstrasse 35 Postfach 10 51 49**
**W-2000 Hamburg 1 (DE)**
(84) **DE**

Patentinhaber : **N.V. Philips' Gloeilampenfabrieken**
**Groenewoudseweg 1**
**NL-5621 BA Eindhoven (NL)**
(84) **CH ES FR GB IT LI**

(72) Erfinder : **Esser, Hildegard**
**Birresbornerstrasse 55**
**W-5000 Köln 41 (DE)**
Erfinder : **Grzesik, Ulrich, Dr.rer.nat.**
**August-Kierspel-Strasse 161**
**W-5060 Bergisch-Gladbach 2 (DE)**
Erfinder : **Vormann, Johann, Dr.rer.nat.**
**Burgfüllkannen 13**
**W-5204 Lohmar 1 (DE)**

(74) Vertreter : **Koch, Ingo, Dr.-Ing. et al**
**Philips Patentverwaltung GmbH**
**Wendenstrasse 35 Postfach 10 51 49**
**W-2000 Hamburg 1 (DE)**

EP 0 335 437 B1

## Beschreibung

Die Erfindung bezieht sich auf ein Verfahren zur Messung der Exzentrizität eines in einem zylindrischen Steckerstift eingebetteten Lichtwellenleiters (LW) sowie auf eine Anordnung zur Durchführung dieses Verfahrens gemäß dem Oberbegriff des Patentanspruchs 6.

Ein derartiges Verfahren ist durch die GB-A 20 40 495 bekannt.

Bei Steckverbindungen von Lichtwellenleitern (LWL) müssen die zu konpelnden Endbereiche der LWL in zylindrischen Steckerstiften fest und zentrisch eingebettet sein. Die optischen Achsen der gekoppelten LWL müssen möglichst genau fluchten. Da die Mantelfläche des steckers als Bezugsfläche für die Ausrichtung der Steckverbindung dient, muß die Exzentrizität beispielsweise eines Monomode-LWL kleiner als 0,5 µm sein, wenn man genügend kleine Steckerdämpfungen erreichen will. Bei Kontrollmessungen muß mit einer Genauigkeit von mindestens 100 nm gemessen werden. Auf den Durchmesser der Steckerhülse von z.B. 1,25 mm bezogen bedeutet das eine relative Genauigkeit von $8 \times 10^{-5}$.

Meßverfahren, die für die Messung der Exzentrizität des Kerns eines LWL relativ zu seiner äußeren Mantelfläche bekannt sind (z.B. "image sharing technique", Firmenschrift "Fibre Optic Bulletin nr. 10 der Firma Vickers Instruments"), sind dafür nicht geeignet.

Der Erfindung liegt die Aufgabe zugrunde, das Meßverfahren der eingangs genannten Art zu verbessern und eine geeignete Meßvorrichtung zu schaffen.

Gemäß einer ersten Lösung ist vorgesehen, daß der optische Mittelpunkt der Stirnfläche des LWL dadurch in die mechanische Drehachse eines die Mantelfläche des Steckerstifts abtastenden Abstandsfühlers gebracht wird, daß gegenüber der Stirnfläche des steckerstifts eine exzentrisch um die mechanische Drehachse rotierende, mit dem LWL optisch gekoppelte Lichtquelle bzw. ein Lichtempfänger angeordnet ist, und daß der steckerstift in eine derartige Lage verschoben wird, daß die bei Drehung der Lichtquelle bzw. des Lichtempfängers gemessene Schwankungsamplitude der vom Lichtsender in den LWL bzw. vom LWL and den Lichtempfänger eingekoppelten Lichtleistung ein Minimum erreicht, und daß danach aus den bei der Relativdrehung des Abstandsfühlers entlang der Mantelfläche des Steckerstifts ermittelten Meßwerten die Exzentrizität des LWL ermittelt wird.

Eine zweite Lösung besteht darin, daß der optische Mittelpunkt der Stirnfläche des LWL dadurch in die mechanische Drehachse eines die Mantelfläche des Steckerstifts abtastenden Abstandsfühlers gebracht wird, daß gegegenüber der Stirnfläche des im Steckerstift angeordneten LWL ein zur mechanischen Drehachse exzentrisch angeordneter Lichtsender bzw. Lichtempfänger ortsfest angeordnet ist, und daß der auf einer um die mechanische Drehachse drehbare Halterung angeordnete steckerstift derart ausgerichtet ist, daß die bei Drehung der Halterung gemessene Schwankungsamplitude der vom Lichtsender in den LWL bzw. vom LWL in den Lichtempfänger eingekoppelten Lichtleistung ein Minimum erreicht, und daß danach aus den bei der Relativdrehung des Abstandsfühlers entlang der Mantelfläche des Steckerstifts ermittelten Meßwerten die Exzentrizität des LWL ermittelt wird.

Für ein solches Verfahren läßt sich eine besonders einfache Vorrichtung robust aufbauen.

Voraussetzung für das Erreichen der gewünschten Genauigkeit ist natürlich, daß die Relativdrehung des Abstandsfühlers um den Umfang des Steckerstifts mittels einer hochpräzisen Lagerung bewirkt wird. Für die Zwecke der vorliegenden Erfindung geeignete handelsübliche Formmeßmaschinen weisen Drehspindeln auf, deren Rundlaufabweichung weniger als 40 nm beträgt.

Als Abstandsfühler sind mechanische Taster oder beispielsweise auch optisch wirkende Geräte bekannter Art geeignet. Genügend genau im nm-Bereich messende Geräte dieser Art sind handelsüblich.

Bei der Ermittlung der Exzentrizität des LWL kann eine Vielzahl von über den Umfang des steckerstifts er.mittelten Meßwerten berücksichtigt werden, damit nicht zufällige Unebenheiten der Steckeroberfläche den Meßwert verfälschen.

Der optische Mittelpunkt - im allgemeinen der Mittelpunkt der stirnfläche eines Kerns eines LWL - muß mit hoher Genauigkeit, nämlich mit einem Versatz von möglichst weniger als 10 nm, in die mechanische Drehachse gebracht werden. Das ist vorteilhaft mittels optischer Justiervrfahren möglich, bei welchen der Lichtdurchgang vom im Steckerstift angeordneten LWL in einen annähernd koaxial dazu angeordneten Sensor-LWL - bzw. umgekehrt - als Kriterium für das Erreichen der Zielposition dient. Derartige Justierverfahren sind vielfältig für die Justierung zweier zu verbindender LWL bekannt.

Durch Patent Abstracts of Japan, Sektion E, Band 2, nr. 104, Seite 5452 E 78, Kokai-Nr. 53-69 652 ist ein Verfahren zur Messung der Exzentrizität eines LWL, bei dem der optische Mittelpunkt der Stirnfläche des LWL in die mechanische Drehachse eines die Mantelfläche des LWL abtastenden Abstandsfühlers gebracht wird und bei dem danach aus den bei der Relativdrehung des Abstandsfühlers entlang der Mantelfläche ermittelten Meßwerten die Exzentrizität des LWL ermittelt wird, bekannt. Dabei wird die Lage des optischen Mittelpunkts der Stirnfläche des LWL durch eingeleitetes Licht sichtbar gemacht und die Verschiebung durch ein Mikroskop kontrolliert.

Es empfiehlt sich, daß die Strahlung vom Lichtsender bzw. zum Lichtempfänger über einen Sensor-LWL auf den im Steckerstift angeordneten LWL gerichtet ist. Dann ist die Empfangs- bzw. Senderichtung eindeutig festlegbar und es ergibt sich ein enges Lichtbündel.

Ein eventueller Winkelversatz der optischen Achse des LWL zur Mittellinie des Steckerstifts läßt sich dadurch vermessen, daß die Strahlachse des Sensor-LWL geneigt zur mechanischen Drehachse verläuft und daß die Achsrichtung des Steckerstifts in eine solche Winkellage zur mechanischen Drehachse gebracht wird, daß der drehwinkelabhängige Anteil der eingekoppelten Lichtleistung ein Minimum erreicht.

Da im allgemeinen sowohl die Exzentrizität als auch der Winkelversatz des LWL gemessen werden müssen, wird bevorzugt, daß der Steckerstift zunächst achsparallel zur mechanischen Drehachse verschoben wird, bis der drehwinkelanhängige Anteil der eingekoppelten Lichtleistung ein Minimum erreicht, und daß danach die Winkellage des Steckerstifts unter Beibehaltung der Lage ihrer Stirnfläche derart verschoben wird, daß der drehwinkelabhängige Anteil der eingekoppelten Lichtleistung praktisch den Wert "Null" erreicht.

In den Asprüchen 6 und 7 sind vorteilhafte Anordnungen zur Ausübung der erfindungsgemäßen Verfahren gekennzeichnet.

Ein insbesondere für Kontrollmessungen geeignetes alternatives Verfahren zur Lösung der eingangs genannten Aufgabe ist dadurch gekennzeichnet, daß der Steckerstift um die geometrische Mittelachse gedreht wird, daß gegenüber der Stirnfläche des zu vermessenden Steckerstifts ein Sensor-LWL in etwa achsparallel derart angeordnet wird, daß seine optische Achse gegenüber der mechanischen Drehachse des Steckerstifts versetzt ist, und daß die Schwankungsamplitude der vom zu vermessenden LWL in den Sensor-LWL bzw. umgekehrt eingekoppelten Lichtleistung als maß für die Extentrizität gemessen wird.

Die Erfindung wird anhand der Beschreibung der Zeichnung näher erläutert.

Fig. 1 zeigt den Prinzipaufbau einer erfindungsgemäßen Meß-Anordnung.

Fig. 2 zeigt mögliche Lagen des zu vermessenden LWL relativ zu einem Sensor-LWL.

Fig. 3 zeigt einen Sensor-LWL, dessen Achse schräg zur mechanischen Drehachse gerichtet ist.

Fig. 4 zeigt die Anordnung nach Fig. 3 nach Ausrichtung der optischen Achse des zu vermessenden LWL in die mechanische Drehachse.

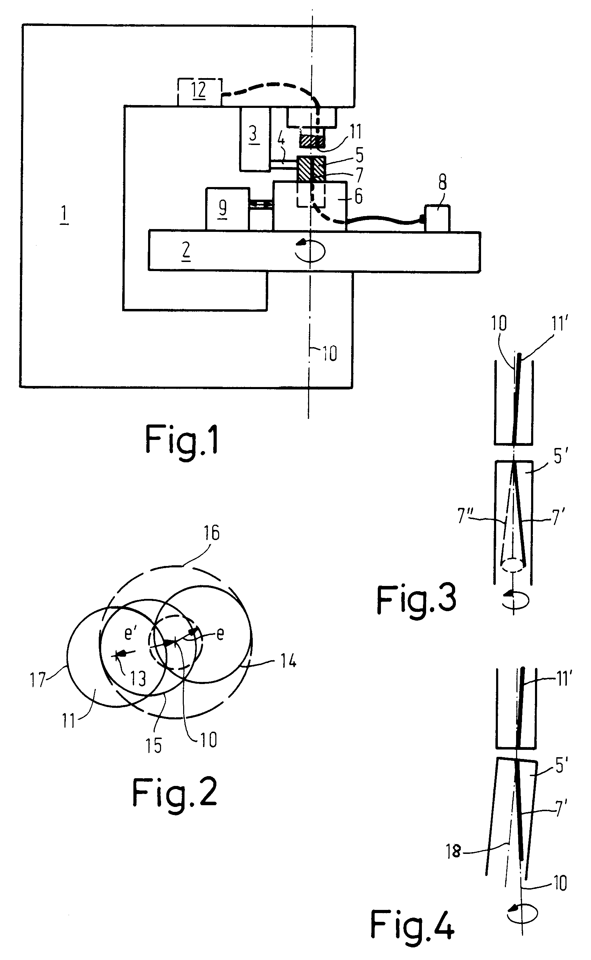

Zur Ausübung des erfindungsgemäßen Verfahrens wurde gemäß Fig. 1 eine handelsübliche Formmeßmaschine verwendet, an deren Gestell 1 ein Drehtisch 2 präzise und mit einer Rundlaufabweichung von weniger als 40 nm gelagert ist. Am oberen Arm des Gestells 1 ist ein Abstandsfühler 3 befestigt, dessen Taster 4 die Oberfläche des Steckerstifts 5 abtastet, welche derart in einer Halterung 6 eingespannt ist, daß der im Steckerstift 5 verlaufende LWL 7 zunächst in etwa in der mechanischen Drehachse 10 des Drehtisches 2 verläuft.

Das andere Ende des LWL 7 ist an einen optischen Sender 8, beispielsweise eine Laserdiode, angekoppelt.

Die Halterung ist durch Manipulatoren 9, von denen lediglich einer gezeichnet ist, in der Ebene des Drehtisches 2 in zwei zueinander senkrechten Koordinatenrichtungen verschiebbar.

Mit geringem Parallelabstand zu der mechanischen Drehachse 10 ist ein Sensor-LWL 11 am oberen Arm des Gestells 1 befestigt und zu einem optischen Empfänger 12 geführt.

In der Figur ist ein außermittig zur geometrischen Mittelachse des Steckerstifts 5 angeordneter LWL 7 in der einzujustierenden Endposition gezeichnet, in welcher er möglichst genau koaxial zur mechanischen Drehachse 10 ausgerichtet ist. In dieser Position wird der Steckerstift 5 durch motorische Drehung des Drehtisches 2 mit etwa 5 min$^{-1}$ gedreht. Die dabei über den gesamten Umfang vom Tastarm 3 gemessenen, auf die Lage der mechanischen Drehachse bezogenen Abstandswerte werden zur Ermittlung eines hypothetischen Umfangskreises der Zylinderfläche der Steckerstift 5 ausgewertet. Der Abstand des Mittelpunktes des hypothetischen Kreises von der mechanischen Drehachse 10 ist dann der zu ermittelnde exzentrische Versatz des LWL 7.

Das Verfahren zur genauen Justierung der Endfläche des LWL 7 in die mechanische Drehachse 10 wird anhand Figur 2 erläutert.

Die optische Achse 13 des Sensor-LWL 11 ist mit einem festen Abstand e′ zur mechanischen Drehachse 10 angeordnet. Wenn die optische Achse des zu vermessenden LWL 7 nach der Einspannung des Steckerstifts 5 in die Halterung 6 zunächst um den Wert e exzentrisch neben der mechanischen Drehachse 10 liegt, so bewegt sie sich bei Drehung des Drehtisches 2 auf dem gestrichelt gezeichneten Kreis mit dem Radius e im Flächenbereich des Hüllkreises 16. Dabei können die Stirnflächen des LWL 7 die mit den Umfangskreisen 14 und 15 angedeuteten Extremlagen relativ zum Umfangskreis 17 des Sensor-LWL 11 annehmen. Entsprechend der relativen Lage von Sende- und Sensor LWL schwankt die vom optischen Sender 8 zum optischen Empfänger 12 gelangende Lichtleistung. Der LWL 7 wird solange mittels der Manipulatoren 9 verschoben, bis die Schwankung dieser Lichtleistung ein Minimum oder den Wert "Null" erreicht. Das ist dann der Fall, wenn der Wert e nach Figur 2 den Wert "Null" annimmt, wenn also wie angestrebt der Versatz zwischen der optischen Achse des LWL 7 und der mechanischen Drehachse 10 nicht mehr vorhanden ist.

Bisher wurde stillschweigend vorausgesetzt, daß die optischen Achsen der LWL 7 und 11 genau parallel zur mechanischen Drehachse 10 verlaufen. Die optischen Achsen von in Steckerstiften eingebrachten Lichtwellenleitern können jedoch auch schräg zur Mittellinie eines Steckerstifts verlaufen. Eine solche Schrägstellung läßt sich vermessen, wenn die optische Achse des Sensor-LWL 11′ gemäß den Figuren 3 und 4 zur mechanischen Drehachse geneigt angeordnet wird.

Die optische Achse des im Steckerstift 5′ schräg zu der Mittelachse 18 (Fig. 4) angeordneten LWL 7′ wandert dann bei Drehung des Drehtisches 2 auf einer Kegelfläche.

In der voll ausgezogenen Position 7′ wird weniger Licht in den LWL 11′ eingekoppelt, als in der gestrichelten Position 7″ des LWL 7′.

Durch Manipulatoren wird die Winkellage des Steckerstifts 5′ solange verschoben, bis die in Figur 4 dargestellte Lage erreicht ist, in welcher der LWL 7′ möglichst genau koaxial zur mechanischen Drehachse 10 ausgerichtet verläuft. Das ist dann der Fall, wenn bei Drehung des Drehtisches 2 ein Minimum der Lichtschwankungen vom Empfänger 12 detektiert wird.

Die Lage der Zylinderfläche des Steckerstifts 5′ kann dann mittels des Abstandsfühlers durch in mindestens zwei Ebenen erfolgende Messung erfaßt werden.

In der Paxis wird man zunächst die zentrische Ausrichtung der Innenfläche des LWL 7′ zur mechanischen Achse 10 vornehmen, wobei wegen der Schräglage des LWL 11′ nicht der Wert "Null" der Schwankung der Anzeige des optischen Empfängers 12 erreicht wird, sondern nur ein Minimum. Danach wird die Winkellage des Steckerstifts 5′ unter Beibehaltung der Lage ihrer Stirnfläche in eine Position gemäß Fig. 4 ausgerichtet. In dieser Position wird dann praktisch die Schwankung "Null" der vom Empfänger 12 detektierten Leistung gemessen.

Der Sensor-LWL 11 und der zu vermessende LWL 7 sollten nach Möglichkeit etwa gleich große Durchmesser haben. Da aber die Justiergenauigkeit nur unwesentlich vom Durchmesserverhältnis abhängt, können auch LWL vermessen werden, deren Durchmesser von demjenigem des Sensors 11 beträchtlich abweichen.

Der Versatz e′ (Fig. 2) des Sensor-LWL 11 zur mechanischen Drehachse 10 sollte zur Erzielung einer hohen Meßempfindlichkeit im Bereich von 0,5 fachen bis 1,5 fachen des Kerndurchmessers des zu vermessenden LWL 7 betragen. Ein solcher Versatz braucht aber nicht mit großer Genauigkeit vorgegeben zu werden.

Beim beschriebenen Ausführungsbeispiel waren die LWL 11 und 7 jeweils Monomode-LWL mit einem Kerndurchmesser von 9 um. Der Achsversatz e′ des Sensor-LWL 11 zur mechanischen Drehachse 10 betrug 10 μm.

Mit der in Fig. 1 dargestellten Anordnung können die optischen Achsen des LWL 7 mit einem Fehler von weniger als 10 nm in die mechanische Drehachse 10 justiert werden. An die zeitliche Konstanz der Sendeleistung des optischen Senders 8 brauchen keine hohen Anforderungen gestellt zu werden, da bei der Einjustierung des zu vermessenden LWL 7 keine Absolutwerte der optischen Leistung gemessen werden müssen.

Die Schwankungsamplitude der Lichtleistung des Empfängers 12 kann jedoch bei einem alternativen Verfahren auch direkt als Maß für die zu ermittelnde Exzentrizität eines LWL genutzt werden. Dann wird der Steckerstift 5 koaxial zur mechanischen Drehachse 10 eingespannt. Unter der Voraussetzung der Konstanz der Lichtleistung des optischen Senders 8 ist dann die Schwankungsamplitude der Anzeige des optischen Empfängers 12 eindeutig von der Exzentrizität e des zu vermessenden LWL 7 abhängig, sodaß nach entsprechender Eichung direkt die Exzentrizität e abgelesen werden kann. Ein derartiges direktes Meßverfahren erlaubt allerdings keine extreme Meßgenauigkeit, da der Meßwert von der Konstanz der Sendelichtleistung abhängig ist.

Eine weitere Fehlerquelle können Verschmutzungen der Stirnflächen der LWL 7 und 11 sein. Ein solches Verfahren ist jedoch besonders einfach und deshalb für Kontrollmessungen zur Überprüfung der Fertigungsqualität gut geeignet.

## Patentansprüche

1. Verfahren zur Messung der Exzentrizität eines in einem zylindrischen Steckerstift (5,5′) eingebetteten Lichtwellenleiters (LWL 7,7′),
<u>dadurch gekennzeichnet</u>, daß der optische Mittelpunkt der Stirnfläche des LWL (7,7′) dadurch in die mechanische Drehachse (10) eines die Mantelfläche des Steckerstifts (5,5′) abtastenden Anstandsfühlers (3) gebracht wird, daß gegenüber der Stirnfläche des Steckerstifts (5,5′) eine exzentrisch um die mechanische Drehachse rotierende, mit dem LWL (7,7′) optisch gekoppelte Lichtquelle (8) bzw. ein Lichtempfänger angeordnet wird, und daß der Steckerstift (5,5′) in eine derartige Lage verschoben wird, daß die bei Drehung der Lichtquelle (8) bzw. des Lichtempfängers gemessene Schwankungsamplitude der vom Lichtsender (8) in den LWL bzw. vom LWL an den Lichtempfänger (12) eingekoppelten Lichtleistung ein Minimum erreicht, und daß danach aus den bei der Relativdrehung des Abstandsfühlers (3) entlang der Mantelfläche des Steckerstifts (5,5′) ermittelten Meßwerten die Exzentrizität des LWL ermittelt wird,

2. Verfahren zur Messung der Exzentrizität eines in einem zylindrischen Steckerstift (5,5′) eingebetteten Lichtwellenleiters (7,7′),

dadurch gekennzeichnet, daß der optische Mittelpunkt der Stirnfläche des LWL (7,7′) dadurch in die mechanische Drehachse (10) eines die Mantelfläche des Steckerstifts (5,5′) abtastenden Abstandsfühlers (3) gebracht wird, daß gegenüber der Stirnfläche des im Steckerstift (5,5′) angeordneten LWL (7,7′) ein zur mechanischen Drehachse (10) exzentrisch angeordneter Lichtsender bzw. Lichtempfänger (12) ortsfest angeordnet wird, und daß der auf einer um die mechanische Drehachse (10) drehbaren Halterung (2) angeordnete Steckerstift (5,5′) derart ausgerichtet wird, daß die bei Drehung der Halterung gemessene Schwankungsamplitude der vom Lichtsender (8) in den LWL bzw. vom LWL in den Lichtempfänger (12) eingekoppelten Lichtleistung ein Minimum erreicht, und daß danach aus den bei der Relativdrehung des Abstandsfühlers (3) entlang der Mantelfläche des Steckerstifts (5,5′) ermittelten Meßwerten die Exzentrizität des LWL ermittelt wird.

3. Verfahren nach Anspruch 1 oder 2,

dadurch gekennzeichnet, daß die Strahlung vom Lichtwellensender bzw. zum Lichtempfänger (12) über einen Sensor-LWL (11) auf den im Steckerstift (5,5′) angeordneten LWL (7,7′) gerichtet ist.

4. Verfahren nach Anspruch 3,

dadurch gekennzeichnet, daß die Strahlachse des Sensor-LWL (11) geneigt zur mechanischen Drehache (10) verläuft und daß die Achsrichtung (17) des Steckerstifts (5,5′) in eine solche Winkellage zur mechanischen Drehachse (10) gebracht wird, daß die gemessene Schwankungsamplitude der Lichtleistung ein Minimum erreicht.

5. Verfahren nach Anspruch 4,

dadurch gekennzeichnet, daß der Steckerstift (5) zunächst achsparallel zur mechanischen Drehachse (10) verschoben wird, bis der drehwinkelabhängige Anteil der eingekoppelten Lichtleistung ein Minimum erreicht, und daß danach die Winkellage des Steckerstifts (5′) relativ zur mechanischen Drehachse (10) unter Beibehaltung der Lage seiner Stirnfläche derart verschoben wird, daß der drehwinkelabhängige Anteil der eingekoppelten Lichtleistung praktisch den Wert "Null" erreicht.

6. Anordnung zur Ausübung des Verfahrens nach einem der Ansprüche 3 bis 5, mit einer um eine mechanische Drehachse (10) drehbaren Halterung (6), in welche ein Steckerstift (5,5′) einspannbar ist, und welche auf einem um die mechanische Drehachse (10) drehbaren Drehteil (2) relativ zu diesem achsparallel verschiebbar angeordnet ist, und mit Einrichtungen, mittels welcher ein die Mantelfläche des Steckerstifts abtastender, am Lagergehäuse (1) für das Drehteil (2) angeordneter Abstandsfühler (3) relativ zum Steckerstift (5,5′) um die mechanische Drehachse (10) drehbar ist,

dadurch gekennzeichnet, daß ein zu einem optischen Empfänger (12) geführter Sensor-LWL (11) mit dem Lagergehäuse (1) des Drehtisches (2) derart fest verbunden ist, daß seine optische Achse exzentrisch zur mechanischen Drehachse (10) des Drehtisches (2) ist.

7. Anordnung nach Anspruch 6,

dadurch gekennzeichnet, daß die Achse des Sensor-LWL (11) geneigt zur mechanischen Drehachse (10) gerichtet ist, und daß Mittel zur Winkelverlagerung der Achsrichtung des Steckerstiftes vorgesehen sind.

8. Verfahren zur Messung der Exzentrizität eines in einem zylindrischen Steckerstift (5,5′) eingebetteten Lichtwellenleiters (7,7′),

dadurch gekennzeichnet, daß der Steckerstift (5,5′) um seine geometrische Mittelachse (17) gedreht wird, daß gegenüber der Stirnfläche des zu vermessenden LWL (7,7′) ein Sensor-LWL (11) in etwa achsparallel derart angeordnet wird, daß seine optische Achse gegenüber der mechanischen Drehachse (10) des Steckerstifts versetzt ist, und daß die Schwankungsamplitude der vom zu vermessenden LWL (7,7′) in den Sensor-LWL (11) bzw. umgekehrt eingekoppelten Lichtleistung als Maß für die Exzentrizität gemessen wird.

## Claims

1. A method of measuring the eccentricity of an optical waveguide (7, 7′) embedded in a cylindrical connector pin (5, 5′),

characterized in that the optical centre of the end face of the waveguide (7, 7′) is introduced into the mechanical axis of rotation (10) of a distance sensor (3) scanning the outer surface of the connector pin (5, 5′) in that opposite the end face of the connector pin (5, 5′) a light source (8) or light receiver is arranged which rotates eccentrically around the mechanical axis of rotation and is optically coupled to the waveguide (7, 7′), and in that the connector pin (5, 5') is moved into such a position that a minimum is reached for the fluctuating amplitude of the light energy measured upon rotation of the light source (8) or light receiver, which light energy is coupled by the light transmitter (8) into the waveguide or by the waveguide into the light receiver (12), and in that subsequently the eccentricity of the waveguide is determined from the measuring values obtained during the relative rotation of the distance sensor (3) along the outer surface of the connector pin (5, 5').

2. A method of measuring the eccentricity of an optical waveguide (7, 7') embedded in a cylindrical connector pin (5, 5'),
characterized in that the optical centre of the end face of the waveguide (7, 7') is introduced into the mechanical axis of rotation (10) of a distance sensor (3) scanning the outer surface of the connector pin (5, 5') in that opposite the end face of the waveguide (7, 7') arranged in the connector pin (5, 5') a light transmitter or a light receiver (12) is being arranged fixedly and eccentrically relative to the mechanical axis of rotation (10) and in that the connector pin (5, 5') which is arranged on a mount (2) rotatable about the mechanical axis of rotation (10) is being aligned in such a way that a minimum is reached for the fluctuating amplitude of the light energy measured upon rotation of the mount, which light energy is coupled by the light transmitter (8) into the waveguide or by the waveguide into the light receiver (12) and in that subsequently the eccentricity of the waveguide is determined from the measuring values obtained during the relative rotation of the distance sensor (3) along the outer surface of the connector pin (5, 5').

3. A method as claimed in Claim 1 or 2,
characterized in that the radiation from the light transmitter or to the light receiver (12) is directed <u>via</u> a sensor waveguide (11) to the waveguide (7, 7') arranged in the connector pin (5, 5').

4. A method as claimed in Claim 3,
characterized in that the beam axis of the sensor waveguide (11) is inclined relative to the mechanical axis of rotation ( 10) and in that the direction of the axis (17) of the connector pin (5, 5') is positioned in such an angle relative to the mechanical axis of rotation (10) that a minimum value is reached for the measured fluctuation amplitude of the light energy.

5. A method as claimed in Claim 4,
characterized in that the connector pin (5) is moved axially parallel to the mechanical axis of rotation (10) until a minimum is reached for the part of the coupled-in light energy which is dependent on the angle of rotation and in that subsequently the angle position of the connector pin (5') relative to the mechanical axis of rotation (10) is moved while maintaining the position of its end face in such a way that substantially the value "zero" is reached for the part of the coupled-in light energy which is dependent on the angle of rotation.

6. An arrangement for performing the method as claimed in any one of Claims 3 to 5, comprising a mount (6) which is rotatable about a mechanical axis of rotation (10), and in which a connector pin (5, 5') can be clamped and which is arranged on a rotary table (2) which is rotatable about the mechanical axis of rotation (10) and is axially parallel movable relative thereto, and devices by means of which a distance sensor (3) scanning the outer surface of the connector pin and connected to the bearing housing (1) for the rotary table (2) is rotatable about the mechanical axis of rotation ( 10) relative to the connector pin (5, 5'),
characterized in that a sensor waveguide (11) connected to an optical receiver (12) is fixedly connected to the bearing housing (1) of the rotary table (2) in such a way that its optical axis is eccentric relative to the mechanical axis of rotation (10) of the rotary table (2).

7. An arrangement as claimed in Claim 6,
characterized in that the axis of the sensor waveguide (11) is inclined relative to the mechanical axis of rotation (10) and in that means are provided for changing the angle of the axial direction of the connector pin.

8. A method of measuring the eccentricity of an optical waveguide (7, 7') embedded in a cylindrical connector pin (5, 5'),
characterized in that the connector pin (5, 5') is rotated about its geometrical central axis (17), in that a sensor waveguide (11) is arranged substantially axially parallel opposite the end face of the waveguide (7, 7') to be measured, such that its optical axis is offset relative to the mechanical axis of rotation (10) of the connector pin and in that the fluctuation amplitude of the light energy coupled by the waveguide (7, 7') to be measured into the sensor waveguide (11), or conversely, is measured as a measure of the eccentricity.

## Revendications

1. Procédé pour la mesure de l'excentricité d'un guide d'ondes lumineuses (7, 7') noyé dans un contact mâle cylindrique (5, 5')
caractérisé en ce que le centre optique de la face avant du guide d'ondes lumineuses (7, 7') est porté dans l'axe de rotation mécanique (10) d'un détecteur de distance (3) explorant la face latérale du contact mâle (5, 5'), qu'une source lumineuse (8) respectivement un récepteur de lumière couplé optiquement au guide d'ondes lumineuses (7, 7') et tournant de façon excentrique autour de l'axe de rotation mécanique est disposée vis-à-vis de la face avant du contact mâle (5, 5') et que le contact mâle (5, 5') est déplacé dans une position telle que l'amplitude d'oscillation, mesurée pendant la rotation de la source lumineuse (8) respectivement du récepteur de lumière, de la puissance lumineuse couplée à partir de la source lumineuse (8) dans le guide d'ondes lumineuses respectivement à partir du guide d'ondes lumineuses dans le récepteur de lumière (12) atteint un minimum et qu'ensuite l'excentricité du guide d'ondes lumineuses est déterminée à partir des valeurs de mesure déterminées pendant la rotation relative du détecteur de distance (3) le long de la surface latérale du contact mâle (5, 5').

2. Procédé pour la mesure de l'excentricité d'un guide d'ondes lumineuses (7, 7') noyé dans un contact mâle cylindrique (5, 5'),
caractérisé en ce que le centre optique de la face avant du guide d'ondes lumineuses (7, 7') est porté dans l'axe de rotation mécanique (10) d'un détecteur de distance explorant la surface latérale du contact mâle (5, 5') qu'une source lumineuse respectivement un récepteur de lumière (12) disposé de façon excentrique par rapport à l'axe de rotation mécanique (10) est disposée stationnairement vis-à-vis de la face avant du guide d'ondes lumineuses (7, 7') disposé dans le contact mâle (5, 5') et que le contact mâle (5, 5') disposé sur une fixation (2) pouvant tourner autour de l'axe de rotation mécanique (10) est aligné de façon que l'amplitude d'oscillation, mesurée pendant la rotation de la fixation, de la puissance lumineuse introduite à partir de la source lumineuse (8) dans le guide d'ondes lumineuses respectivement à partir du guide d'ondes lumineuses dans le récepteur de lumière (12) atteigne un minimum et qu'ensuite l'excentricité du guide d'ondes lumineuses est déterminée à partir des valeurs de mesure déterminées pendant la rotation relative du détecteur de distance (3) le long de la surface latérale du contact mâle (5, 5').

3. Procédé selon la revendication 1 ou 2,
caractérisé en ce que le rayonnement provenant de la source lumineuse (11) respectivement émis vers le récepteur de lumière (12) est dirigé par l'intermédiaire d'un guide d'ondes lumineuses - capteur (11) sur le guide d'ondes lumineuses (7, 7') disposé dans le contact mâle (5, 5').

4. Procédé selon la revendication 3,
caractérisé en ce que l'axe de faisceau du guide d'ondes lumineuses - capteur (11) s'étend de façon inclinée par rapport à l'axe de rotation mécanique (10) et que la direction (17) de l'axe du contact mâle (5, 5') est portée dans une position angulaire par rapport à l'axe de rotation mécanique (10) telle que l'amplitude d'oscillation de la puissance lumineuse atteint un minimum.

5. Procédé selon la revendication 4,
caractérisé en ce que le contact mâle (5) est d'abord décalé parallèlement à l'axe de rotation mécanique (10) jusqu'à ce que la part dépendant de l'angle de rotation de la puissance lumineuse introduite atteigne un minimum et qu'ensuite la position angulaire du contact mâle (5') est décalée par rapport à l'axe de rotation mécanique (10), tout en maintenant la position de sa face avant, de façon que la part dépendant de l'angle de rotation de la puissance lumineuse introduite atteigne pratiquement la valeur "zéro".

6. Dispositif pour la mise en oeuvre du procédé selon l'une des revendications 3 à 5, comportant une fixation (6) qui peut tourner autour d'un axe de rotation mécanique (10) et dans laquelle peut être serré un contact mâle (5, 5') et qui est disposée sur une partie rotative (2) pouvant tourner autour d'un axe de rotation mécanique (10) de façon qu'elle puisse glisser par rapport à ladite partie de rotation (2), tout en maintenant la direction de l'axe et des dispositifs à l'aide desquels un détecteur de distance (3) disposé au boîtier de palier (1) pour la partie rotative (2) et explorant la face latérale du contact mâle peut tourner par rapport au contact mâle (5, 5') autour de l'axe de rotation mécanique (10),
caractérisé en ce qu'un guide d'ondes lumineuses - capteur (11) conduit à un récepteur optique (12) est relié rigidement au boîtier de palier (1) de la table rotative (2) de façon que son axe optique soit excentrique par rapport à l'axe de rotation mécanique ( 10) de la table rotative (2).

7. Dispositif selon la revendication 6,
caractérisé en ce que l'axe du guide d'ondes lumineuses (capteur 11) est dirigé de façon inclinée par rapport à l'axe de rotation mécanique (10) et en ce que des moyens sont prévus pour le décalage angulaire de la direction axiale du contact mâle.

8. Procédé pour la mesure de l'excentricité d'un guide d'ondes lumineuses (7, 7') noyé dans un contact mâle cylindrique (5, 5'),
caractérisé en ce que le contact mâle (5, 5') est tourné autour de son axe géométrique (17), que vis-à-vis de la face avant du guide d'ondes lumineuses (7, 7') à mesurer est disposé un guide d'ondes lumineuses - capteur (11) pratiquement parallèlement à l'axe du contact mâle, que son axe optique est décalé par rapport à l'axe de rotation mécanique (10) du contact mâle et que l'amplitude d'oscillation de la puissance lumineuse introduite à partir du guide d'ondes lumineuses (7, 7') à mesurer dans le guide d'ondes lumineuses - capteur (11), respectivement inversement, est mesurée comme mesure pour l'excentricité.

7

Fig.1

Fig.3

Fig.2

Fig.4